# FASCICULE DE BREVET EUROPEEN

(11) **EP 1 980 447 B1**
(45) Date de publication et mention de la délivrance du brevet: **25.09.2013**
(21) Numéro de dépôt: 08154193.0
(22) Date de dépôt: 08.04.2008
(51) Int. Cl.: B60Q 1/08, B60Q 1/12

(54) **Dispositif d'éclairage compact réalisant une fonction code virage**
Kompakte Beleuchtungsvorrichtung, die eine Kurvenkode-Funktion umsetzt
Compact lighting device performing a turning code function

(30) Priorité: 13.04.2007 FR 0702705
(43) Date de publication de la demande: 15.10.2008
(73) Titulaire: VALEO VISION, 93012 Bobigny (FR)
(72) Inventeur: Blandin, Jonathan, 93320 Les Pavillons sous Bois (FR); Pauty, Etienne, 75019 Paris (FR); Reiss, Benoît, 95600 Eaubonne (FR); Sanchez, Vanesa, 75011 Paris (FR)

(56) Documents cités:
- EP-A- 1 669 665
- EP-A- 1 762 431
- EP-A- 1 818 601
- DE-A1-102005 014 754
- GB-A- 2 395 548
- JP-A- 2001 001 832
- JP-A- 2003 200 779
- US-A1- 2001 028 565

## Description

La présente invention a pour objet un procédé et un dispositif d'éclairage compact permettant la réalisation d'une fonction de type code virage. L'invention a essentiellement pour but de proposer une solution pour réaliser différentes fonctions d'éclairage, comme par exemple une fonction de type code virage, au moyen d'un dispositif d'éclairage dont l'encombrement est limité, quel que soit le type de sources lumineuses intervenant dans ledit dispositif d'éclairage, par exemple avec des sources lumineuses de type diodes électroluminescentes.

Le domaine de l'invention est, d'une façon générale, celui des projecteurs de véhicule automobile. Dans ce domaine, on connaît différents types de projecteurs, ou dispositifs d'éclairage, parmi lesquels on trouve essentiellement:
- des feux de position, d'intensité et de portée faible;
- des feux de route longue portée, et des feux de complément de type longue portée, dont la zone de vision sur la route avoisine 200 mètres, et qui doivent être éteints lorsque l'on croise un autre véhicule afin de ne pas éblouir son conducteur; ce sont des faisceaux sans coupure
- des projecteurs perfectionnés, dits bifonctions, qui cumulent les fonctions de feux de croisement et de feu de route en incorporant un cache amovible;
- des feux antibrouillard ;
- et, plus particulièrement concernés par l'invention, des feux de croisement, ou codes, d'intensité importante et de portée sur la route avoisinant 70 mètres, qui sont utilisés essentiellement la nuit et dont la répartition du faisceau lumineux, à coupure généralement en forme de V, est telle qu'elle permet de ne pas éblouir le conducteur d'un véhicule croisé.

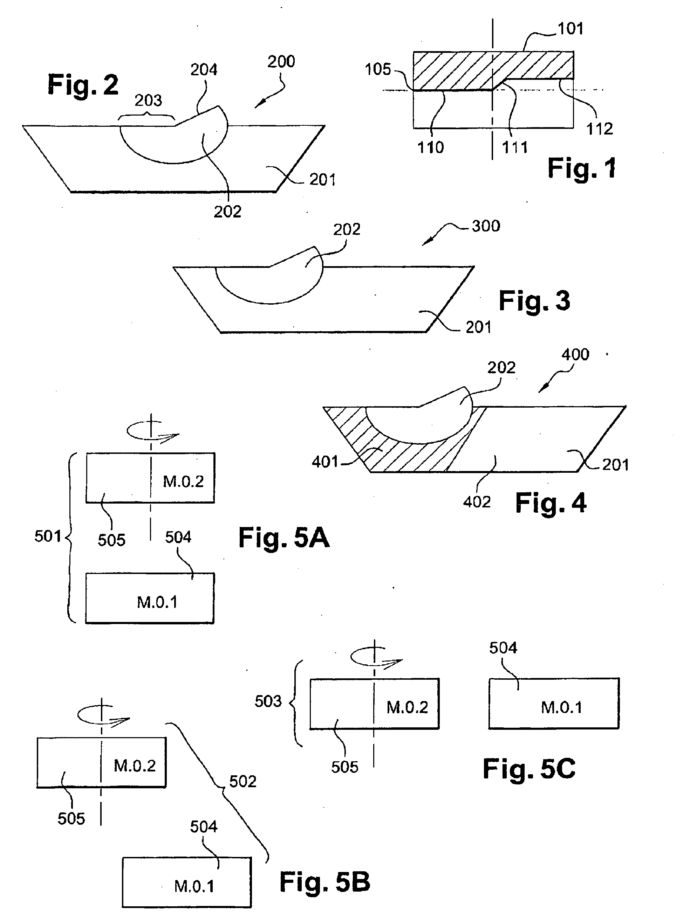

A la figure 1, on a représenté, de façon schématique, une projection 101 sur une surface plane du faisceau lumineux produit par un dispositif d'éclairage de type code. La surface plane de projection est disposée face au dispositif d'éclairage considéré, perpendiculairement à son axe optique. La partie hachurée de la projection correspond à une absence de lumière dans cette partie, la partie laissée blanche correspondant à un éclairement normal au moyen du dispositif d'éclairage considéré.

La projection 101 présente une ligne de coupure non plate 105, essentiellement constituée d'une partie horizontale basse 110, suivie d'un décrochement 111, consistant en un segment oblique au niveau de la projection de l'axe optique, puis d'une partie horizontale haute 112. Une telle configuration permet de ne pas éblouir les conducteurs croisés, à gauche dans l'exemple considéré, tout en assurant un éclairage optimal sur la droite de la route.

D'une manière générale, une ligne de coupure est une ligne d'éclairage limite au-dessus de laquelle il est interdit d'éclairer la route. Dans les pays à circulation à droite, cette ligne de coupure est horizontale sur toute la largeur de la route et sur le bas côté gauche de la route ; elle forme par exemple un angle de 15° au-dessus de l'horizontale, sur le bas côté droit de la route. Elle a pour rôle d'éviter que l'éclairage du véhicule n'éblouisse un conducteur dans un véhicule en sens inverse ou le véhicule le précédant. La suite du document est illustrée au moyen d'exemples applicables à la circulation à droite. Les différents exemples décrits sont bien sur directement transposables à des conditions de circulation à gauche.

Il existe deux familles principales de modules optiques, qui correspondent à deux agencements distincts desdits modules optiques, et qui sont susceptibles d'intervenir dans le dispositif d'éclairage selon l'invention. On comprend par module optique un système optique comprenant au moins une source lumineuse, par exemple une ou plusieurs diodes électroluminescentes regroupées, ou une lampe halogène ou xénon, éventuellement disposée dans un réflecteur, et qui soit de préférence autonome, c'est-à-dire qui soit apte à être allumé ou éteint séparément des autres modules optiques du dispositif d'éclairage dans lequel il est installé.

Les deux familles principales de modules optiques sont les suivantes:

La première famille est celle des modules optiques dits elliptiques. Dans ce type de projecteurs, une tache de concentration lumineuse est engendrée par une source lumineuse disposée dans un miroir. Typiquement, la source lumineuse est disposée au premier foyer d'un miroir en forme d'ellipsoïde, ladite tache se formant au second foyer du miroir. La tache de concentration lumineuse est ensuite projetée sur la route par une lentille convergente, par exemple une lentille de type plan-convexe.

La seconde famille est celle des modules optiques dits de réflexion à surface complexe ou à surface paraboliques. Dans ce type de modules optiques, un faisceau lumineux est engendré par une source lumineuse de petite dimension disposée dans un réflecteur, ou miroir. La projection sur la route des rayons lumineux réfléchis par un réflecteur approprié permet d'obtenir directement un faisceau lumineux obéissant aux différentes contraintes imposées par les normes. Cette famille de modules optiques inclut les projecteurs dits à surface libre, ou surface complexe, qui permettent d'obtenir directement un faisceau lumineux présentant une ligne de coupure désirée.

Comme précisé ultérieurement, le dispositif d'éclairage selon l'invention fait intervenir des modules optiques qui pourront appartenir indifféremment à la première famille ou à la deuxième famille.

Les dispositifs d'éclairage classiques qui viennent d'être évoqués, plus particulièrement ceux qui sont utilisés comme feux de croisement, produisent des faisceaux lumineux qui sont perfectibles lors de leur utilisation dans certaines conditions. Ainsi, par exemple, lorsqu'un véhicule aborde un virage, les projecteurs continuent à éclairer droit devant eux alors qu'il serait plus judicieux d'orienter le faisceau lumineux dans la direction du virage emprunté. C'est pourquoi, en complément des fonctions projecteurs principales classiques, notamment codes et routes, différents perfectionnements sont progressivement apparus.

On a ainsi vu se développer des fonctions élaborées, dites fonctions avancées, ou AFS (« Advanced Front lighting System » en anglais pour système avancé d'éclairage frontal), parmi lesquelles on trouve notamment : une fonction dite « Town Light » en anglais, pour feu de ville, qui assure l'élargissement d'un faisceau de type feu de croisement tout en diminuant légèrement sa portée ; une fonction dite « Motorway » Light en anglais, pour feu d'autoroute, qui assure une augmentation de la portée d'un feu de croisement ; une fonction dite AWL (« Adverse Weather Light » en anglais, pour feu de mauvais temps), qui assure une modification d'un faisceau de feu de croisement pour éviter tout éblouissement par un reflet de son propre projecteur.

Dans les fonctions de type AFS, on trouve également, directement concernée par l'invention, une fonction dite DBL (« Dynamic Bending Light » en anglais pour lumière virage mobile, appelée code virage en langue française), qui réalise un projecteur orientable, appelé aussi dispositif d'éclairage à faisceau mobile : un tel dispositif d'éclairage est apte à modifier l'orientation d'un faisceau lumineux produit par un dispositif d'éclairage, de telle sorte que lorsque le véhicule aborde un virage, la route est éclairée de façon optimale, en suivant la géométrie de la route. Un exemple de réalisation d'un dispositif DBL est décrit dans GB 2395 548 A.

Pour réaliser une telle fonction, une première technique connue consiste à rendre mobile le faisceau global du dispositif d'éclairage grâce à un actionneur contrôlant le pivotement du dispositif d'éclairage dans sa totalité en fonction d'une information provenant du véhicule, par exemple par l'intermédiaire d'un capteur d'angle volant. On parle alors de dispositif d'éclairage articulé. Un exemple de réalisation de cette première technique est décrit dans le brevet FR 2 846 609.

Une deuxième technique, telle que celle décrite dans la demande de brevet FR 2 857 921, consiste en un dispositif projecteur lumineux fixe comportant une pluralité de sources lumineuses, et des moyens pour commander un allumage successif de sources lumineuses complémentaires, l'allumage successif des dites sources dépendant de la trajectoire du véhicule de façon à assurer un effet de balayage lumineux vers l'intérieur d'un virage abordé. Un autre exemple de réalisation de cette technique, appelée en anglais FBL pour "fixed bending light", est décrit dans US 2001/0028565A.

La deuxième technique est aujourd'hui essentiellement utilisée avec des diodes électroluminescentes. En effet, de telles sources lumineuses sont de plus en plus utilisés dans les dispositifs d'éclairage, qui tirent avantage de plusieurs propriétés des diodes électroluminescentes :
- tout d'abord, depuis longtemps, on sait que les diodes électroluminescentes ne rayonnent pas de façon omnidirectionnelle, mais rayonne dans un demi espace opposé au substrat qui supporte sa jonction P-N ; ainsi, en utilisant un rayonnement plus directif que les lampes halogènes ou à décharge, la quantité d'énergie perdue est moins importante. Les diodes consomment moins d'énergie, même à intensité de rayonnement égal, que les lampes à décharge ou les lampes halogènes.
- ensuite, on a récemment perfectionné ces diodes en terme d'intensité de rayonnement ; elles peuvent désormais rayonner un flux d'au moins 100 lumens. La quantité de chaleur qu'elles dégagent est cependant limitée, et un certain nombre de contraintes, liées à la dissipation de la chaleur dans les dispositifs d'éclairage utilisant d'autres types de sources lumineuses, disparaissent.
- de plus, elles émettent un rayonnement, depuis longtemps dans le rouge mais désormais également dans le blanc ; de surcroît, elles sont peu encombrantes, et leur forme particulière offre des possibilités nouvelles pour la réalisation et la disposition des surfaces complexes qui leur sont associées. Elles permettent de travailler le style des dispositifs d'éclairage en facilitant la création de formes originales.

Cependant, dans la deuxième technique évoquée de réalisation des fonctions DBL, notamment en utilisant des diodes électroluminescentes comme source lumineuses complémentaires, l'encombrement d'un tel dispositif d'éclairage est très important, notamment du fait du nombre de LEDs qui sont ajoutées en tant que sources lumineuses complémentaires ; de plus, un tel ajout rend cette solution particulièrement coûteuse.

Par ailleurs, dans la première technique évoquée, du fait de l'intensité lumineuse relativement faible que les LEDs sont capables de produire, il est nécessaire d'en disposer un nombre important au sein du dispositif d'éclairage. Faire bouger l'ensemble des LEDs dans un tel dispositif d'éclairage est alors compliqué à double titre : d'une part, l'encombrement dû au mécanisme de mise en mouvement et des diodes elles-mêmes est maximal, et d'autre part, le poids des éléments à bouger pour faire pivoter le faisceau lumineux est conséquent et donne naissance à des jeux importants entre les différents éléments intervenant lors de la mise en mouvement.

L'objet de l'invention propose une solution aux problèmes qui viennent d'être mentionnés. Dans l'invention, on propose un procédé et un dispositif d'éclairage apte à réaliser une fonction DBL, dans lequel le poids des éléments entrant en mouvement lors du déplacement du faisceau lumineux réalisant la fonction DBL, ainsi que l'encombrement du dispositif d'éclairage dans son ensemble, sont limités, notamment lorsque les sources lumineuses intervenant dans la réalisation de la fonction DBL sont de type diodes électroluminescentes. A cet effet, on propose, dans le dispositif d'éclairage selon l'invention, de disposer au moins un premier module optique, réalisant une coupure sensiblement plate et horizontale, et un deuxième module optique, réalisant une ligne de coupure non plate, seul le deuxième module optique étant apte à entrer en mouvement pour réaliser la fonction DBL. Avantageusement, le deuxième module génère un faisceau lumineux contribuant essentiellement à la réalisation du point chaud du faisceau lumineux global produit par le dispositif d'éclairage selon l'invention.

Dans différents modes de réalisation, le dispositif d'éclairage selon l'invention est apte à réaliser des variations d'intensité lumineuses de différentes sources lumineuses, augmentant ainsi la sensation de mouvement continu du faisceau lumineux réalisant la fonction DBL (ou fonction code virage).

L'invention concerne un procédé selon la revendication 1 et un dispositif d'éclairage selon la revendication 14.

Outre les caractéristiques principales, le dispositif d'éclairage selon l'invention peut présenter une ou plusieurs caractéristiques supplémentaires parmi les suivantes :
- la (ou les) source(s) lumineuse(s) du deuxième module optique et/ou la (ou les) source(s) lumineuse(s) du premier module optique est (sont) de type diode électroluminescente ;
- l'intensité lumineuse du premier faisceau lumineux est apte à diminuer lorsque le véhicule automobile aborde, ou évolue dans, un virage orienté du côté opposé au côté du véhicule où ledit dispositif d'éclairage est disposé ;
- le premier module optique comporte une pluralité de sources lumineuses, l'allumage ou l'augmentation de l'intensité de chacune des sources lumineuses étant fonction du fait que le véhicule automobile aborde, ou évolue dans, un virage, rendant progressivement le faisceau lumineux global plus lumineux du côté correspondant à l'orientation du virage, lorsque cette orientation correspond au côté du véhicule où ledit dispositif d'éclairage est disposé ;
- l'allumage ou la diminution de l'intensité de chacune des sources lumineuses du premier module optique est fonction du fait que le véhicule automobile aborde, ou évolue dans, un virage, rendant progressivement le faisceau lumineux global moins lumineux du côté correspondant à l'orientation du virage, lorsque cette orientation correspond au côté opposé au côté du véhicule où ledit dispositif d'éclairage est disposé ;
- une première source lumineuse statique réalisant un premier point chaud dans le faisceau lumineux global, le premier point chaud étant orienté entre l'axe optique du dispositif d'éclairage et le côté correspondant au côté externe du dispositif d'éclairage, la première source lumineuse statique étant apte à être allumée ou à augmenter son intensité lumineuse, lorsque le véhicule aborde, ou évolue dans, un virage orienté du côté du véhicule où ledit dispositif d'éclairage est disposé ;
- la première source lumineuse statique est apte à être éteinte ou à diminuer son intensité lumineuse, lorsque le véhicule aborde ou évolue dans un virage orienté du côté opposé au côté du véhicule où ledit dispositif d'éclairage est disposé ;
- le deuxième module optique est apte à être positionné selon au moins deux positions, une première position selon laquelle le faisceau global correspond à un faisceau code pour trafic à droite, et une deuxième position dans laquelle le faisceau global correspond à un faisceau code pour trafic à gauche ;
- le deuxième module optique est apte à être positionné de manière à émettre un faisceau lumineux dont la zone d'intensité la plus élevée est disposée suivant l'axe optique dudit dispositif d'éclairage et éclairant pour partie au-dessus de la coupure horizontale dudit premier faisceau lumineux de manière à contribuer à générer un faisceau route ;
- le deuxième module optique est apte à réaliser un mouvement de rotation selon un axe approximativement horizontal pour contribuer à générer un faisceau de type feu d'autoroute ;
- l'intensité du deuxième faisceau lumineux peut être modulée en augmentant ou en diminuant ;
- le dispositif d'éclairage permet l'augmentation de l'intensité du deuxième faisceau lumineux parallèlement à la diminution de l'intensité du premier faisceau lumineux, pour une fonction de type feu de mauvais temps ;
- le dispositif d'éclairage permet la diminution de l'intensité du deuxième faisceau lumineux parallèlement à l'augmentation de l'intensité du premier faisceau lumineux, pour une fonction de type feu de ville ;
- le deuxième faisceau lumineux contribue pour au moins quarante pour cent de l'intensité lumineuse totale de la zone d'intensité maximale du faisceau lumineux global, préférentiellement pour entre soixante et quatre-vingt pour cent de l'intensité lumineuse totale de la zone d'intensité maximale du faisceau lumineux global ;
- des variations dans l'intensité de la ou des sources lumineuses du premier et/ou du deuxième modules optiques permettent de générer les variations des intensités lumineuses respectives du premier faisceau et du deuxième faisceau lumineux.

Toutes les caractéristiques supplémentaires du dispositif d'éclairage selon l'invention, dans la mesure où elles ne s'excluent pas mutuellement, sont combinées selon toutes les possibilités d'association pour aboutir à différents exemples de réalisation de l'invention.

La présente invention est destinée à être utilisée dans un véhicule automobile.

La présente invention se rapporte également à un procédé de mise en oeuvre d'un dispositif d'éclairage comportant les caractéristiques des revendications 1-13.

L'invention et ses différentes applications seront mieux comprises à la lecture de la description qui suit et à l'examen des figures qui l'accompagnent.

Celles-ci ne sont présentées qu'à titre indicatif et nullement limitatif de l'invention. Les figures montrent :
- à la figure 1 déjà décrite, une représentation schématique d'une ligne de coupure d'un dispositif d'éclairage de type code;
- à la figure 2, une représentation schématique d'un faisceau lumineux global produit par un premier exemple de réalisation de dispositif d'éclairage selon l'invention lorsque le véhicule automobile roule en ligne droite;
- à la figure 3, une représentation schématique d'un faisceau lumineux global produit par le premier exemple de réalisation de dispositif d'éclairage selon l'invention lorsque le véhicule automobile négocie un virage à gauche;
- à la figure 4, une représentation schématique d'un faisceau lumineux global produit par un deuxième exemple de réalisation de dispositif d'éclairage selon l'invention lorsque le véhicule automobile négocie un virage à gauche;
- aux figures 5-A, 5-B et 5-C, différents exemples de disposition relative de différents modules optiques intervenant dans les premier et deuxième exemples de dispositif d'éclairage selon l'invention ;
- à la figure 6, une représentation schématique d'un faisceau lumineux global produit par deux dispositifs d'éclairage d'un troisième exemple de réalisation de dispositif d'éclairage selon l'invention lorsque le véhicule automobile roule en ligne droite;
- à la figure 7, une représentation schématique d'un faisceau lumineux global produit par le troisième exemple de réalisation de dispositif d'éclairage selon l'invention lorsque le véhicule automobile négocie un virage à gauche;
- à la figure 8, une représentation schématique d'un faisceau lumineux global produit par un quatrième exemple de réalisation de dispositif d'éclairage selon l'invention lorsque le véhicule automobile négocie un virage à gauche;
- aux figures 9-A, 9-B et 9-C, différents exemples de disposition relative de différents modules optiques intervenant dans le troisième et le quatrième exemple de dispositif d'éclairage selon l'invention ;
- à la figure 10, différentes courbes isolux illustrant l'évolution, lorsque le véhicule prend un virage à gauche, de la répartition de l'intensité lumineuse du faisceau lumineux global produit par le dispositif d'éclairage selon l'invention ;
- à la figure 11, un exemple détaillé de dispositif d'éclairage selon l'invention.

Les différents éléments apparaissant sur plusieurs figures auront gardé, sauf précision contraire, la même référence. Les notions de direction et de position, de type "gauche", "droite", "au-dessus"...sont mentionnées dans des conditions habituelles d'utilisation des exemples de dispositif d'éclairage selon l'invention. Les positions des projecteurs sur le véhicule sont notamment définies par rapport au point de vue du conducteur. Les positions, intensités lumineuses ou directions des différents éléments ou faisceaux lumineux, qui sont désignés par l'expression "de référence", sont celles observées lorsque le véhicule évolue en ligne droite.

La figure 2 représente de façon schématique une projection 200 de faisceau lumineux global produit par un premier exemple de réalisation de dispositif d'éclairage selon l'invention. D'une façon plus générale, on désigne par faisceau lumineux global le faisceau lumineux produit par le dispositif d'éclairage dans sa totalité, correspondant à la superposition des faisceaux lumineux produits par l'ensemble des modules optiques, et éventuellement par des sources lumineuses complémentaires Comme on le verra, le faisceau lumineux global résulte systématiquement, dans l'invention, de la superposition d'au moins deux faisceaux lumineux différents produits par au moins deux modules optiques distincts.

Dans l'exemple de la figure 2, le faisceau lumineux global résulte de la superposition d'un premier faisceau lumineux 201 et d'un deuxième faisceau lumineux 202. Le premier faisceau lumineux réalise une coupure horizontale. Il est produit par un premier module optique, de type elliptique ou de type dit de réflexion (à surface complexe ou à surface parabolique), dont de nombreux exemples de réalisation sont connus dans l'état de la technique, permettant de concentrer la lumière exclusivement sous une ligne de coupure horizontale. Le deuxième faisceau lumineux 202 réalise une coupure non plate, présentant, dans cet exemple, un segment horizontal 203 qui se prolonge en une partie inclinée 204 d'environ 15 degrés vers le haut par rapport à l'horizontale. La forme globale du deuxième faisceau lumineux correspond à un faisceau lumineux de type code classique. Dans d'autres exemples de réalisation, l'angle de coupure peut adopter des valeurs allant environ de 10 à 60 degrés.

Dans l'exemple représenté, le deuxième faisceau lumineux est dirigé dans l'axe optique du dispositif d'éclairage ; une telle configuration se produit, dans les différents exemples de réalisation de l'invention, lorsque le véhicule évolue en ligne droite. La contribution du deuxième faisceau lumineux au faisceau lumineux global permet l'obtention d'un point chaud, dont le contour correspond sensiblement à celui de la projection du deuxième faisceau lumineux 202. Un point chaud, également appelé spot lumineux, est, d'une façon générale, situé au centre d'un halo de lumière moins intense. On appelle donc "point chaud" la zone d'intensité lumineuse maximale située, au moins lorsque le véhicule évolue en ligne droite, au centre d'un faisceau lumineux, dans l'axe dudit faisceau.

Dans différents exemples de réalisation, la contribution du deuxième faisceau lumineux au point chaud de l'axe optique du dispositif d'éclairage considéré est d'au moins 40 pour cent de l'intensité lumineuse totale du point chaud considéré, et préférentiellement de 60 à 80 pour cent de l'intensité lumineuse totale du point chaud considéré.

La figure 3 reprend les éléments de la figure 2, mais dans une nouvelle disposition correspondant à celle observée lorsque le véhicule emprunte un virage à gauche. Selon l'invention, dans un tel cas, le premier faisceau lumineux 201 ne bouge pas par rapport à sa position de référence. Par contre, selon l'invention, le deuxième faisceau lumineux 202 est décalé sur la gauche par rapport à sa position de référence. On obtient ainsi un faisceau lumineux global 300 dont le point chaud est décalé vers la gauche.

D'une manière générale, on propose, dans l'invention, de décaler le point chaud correspondant à la superposition du deuxième faisceau lumineux sur le premier faisceau lumineux dans une direction correspondant à l'orientation du virage emprunté. Le décalage sur la gauche ou sur la droite est réalisé progressivement, par exemple à partir des informations dites d'angle volant mesurées par un capteur adapté.

Le fait que seul le deuxième module optique, produisant le faisceau lumineux réalisant la coupure oblique de la ligne de coupure du faisceau lumineux global, évolue en rotation permet de préserver le rendu dynamique et continu des fonctions DBL (ou code virage) tout en limitant le nombre de sources lumineuses à déplacer pour réaliser un tel rendu dynamique.

Pour augmenter le rendu dynamique dans le mouvement du faisceau lumineux global, il est possible de faire également varier l'intensité du faisceau lumineux émis par le premier module optique 201.

Selon une première variante, l'intensité du faisceau lumineux émis par le premier module optique est apte à augmenter lorsque le véhicule automobile aborde, ou évolue dans, un virage orienté du côté du véhicule où ledit dispositif d'éclairage est disposé. Dans ce cas lorsqu'on équipe le véhicule de deux projecteurs de ce type, un à droite et un à gauche du véhicule, l'intensité du faisceau émis par le premier module optique du projecteur droit est augmentée, lorsque le véhicule automobile aborde, ou évolue dans, un virage orienté à droite. Lorsque le véhicule automobile aborde, ou évolue dans, un virage orienté à gauche c'est en revanche l'intensité du faisceau émis par le premier module optique du projecteur gauche qui est augmentée.

Cette dernière variante de réalisation peut être améliorée en une deuxième variante, dans laquelle l'intensité lumineuse de la première source lumineuse du premier module optique est apte à diminuer lorsque le véhicule automobile aborde, ou évolue dans, un virage orienté du côté opposé au côté du véhicule où ledit dispositif d'éclairage est disposé. Dans ce cas, en plus des variations décrites au paragraphe précédent, l'intensité du faisceau émis par le premier module optique du projecteur gauche est diminuée, lorsque le véhicule automobile aborde, ou évolue dans, un virage orienté à droite. Lorsque le véhicule automobile aborde, ou évolue dans, un virage orienté à gauche, l'intensité du faisceau émis par le premier module optique du projecteur droit est diminuée.

Dans les exemples suivants de réalisation de l'invention, on cherche à améliorer davantage une impression de rendu dynamique dans le mouvement du faisceau lumineux global, en modifiant l'intensité lumineuse de certaines zones du faisceau lumineux global, notamment en augmentant l'intensité lumineuse dans les zones situées du côté du virage emprunté, et/ou en diminuant l'intensité lumineuses des zones situées du côté opposé au côté du virage.

Ainsi, dans l'exemple illustré à la figure 4, on crée un faisceau lumineux global 400 dans lequel l'intensité lumineuse du premier faisceau lumineux 201 est augmentée dans une partie gauche 401 du premier faisceau lumineux 201, une partie droite 402 du premier faisceau lumineux conservant son intensité lumineuse de référence. Ce mode de réalisation peut être amélioré en une seconde variante, dans laquelle l'intensité lumineuse du premier faisceau lumineux est diminuée, dans la partie droite 402, par rapport à son intensité lumineuse de référence, pour accentuer un peu plus le contraste entre les zones 401 et 402. La figure 4, représente la mise en oeuvre d'un dispositif d'éclairage selon la présente invention monté à gauche du véhicule (selon le point de vue du conducteur), lorsque le véhicule aborde ou évolue dans un virage orienté du même côté, c'est-à-dire un virage tournant à gauche.

Dans le cadre d'un véhicule équipé de deux dispositifs d'éclairage, gauche et droite, tel que décrit au paragraphe précédent, le rendu dynamique peut encore être amélioré avec un dispositif apte à réaliser la fonction décrite précédemment et celle consistant à diminuer l'intensité du premier faisceau lumineux. Ainsi lorsque le véhicule aborde, ou évolue dans, un virage orienté par exemple à gauche, le projecteur gauche du véhicule (selon le point de vue du conducteur) émettra un faisceau global tel que décrit au paragraphe précédent, et parallèlement, dans le projecteur droit du véhicule, l'intensité du premier faisceau lumineux sera diminuée.

Si la figure 4, représente un premier faisceau lumineux dans lequel l'intensité lumineuse est modulée dans deux zones, 401 et 402, il est néanmoins possible de réaliser un projecteur comprenant plus de deux zones dans le premier faisceau lumineux. La modulation est alors effectuée au niveau de chacune des zones de manière progressive en fonction de la courbe que prend le véhicule.

Dans la pratique, pour obtenir de telles variations d'intensité lumineuse, on fait varier le courant d'alimentation de différentes sources lumineuses du premier module optique. Dans certains exemples de réalisation, on utilise des sources lumineuses dédiées complémentaires, qui ne s'allument que lorsqu'un virage est abordé, l'allumage de ces sources étant progressif ; par exemple, les sources lumineuses complémentaires produisent un faisceau lumineux qui apporte leur contribution au faisceau lumineux global essentiellement aux extrémités gauche ou droite du faisceau lumineux global.

Les figures 5-A, 5-B et 5-C montrent respectivement une première, une deuxième et une troisième dispositions relatives d'un premier module optique 504 et d'un deuxième module optique 505, les dispositions relatives étant référencées respectivement 501, 502 et 503. Comme illustré, les deux modules optiques peuvent être disposés l'un au-dessus de l'autre, l'un à côté de l'autre, ou en diagonale l'un par rapport à l'autre, les deux premières solutions, référencées 501 et 503 étant privilégiées pour des raisons d'encombrement. Dans le mode préférentiel représenté dans ces figures 5-A, 5-B et 5-C le deuxième module optique est apte à réaliser un mouvement de rotation selon un axe approximativement vertical, permettant ainsi la réalisation des fonctions décrites.

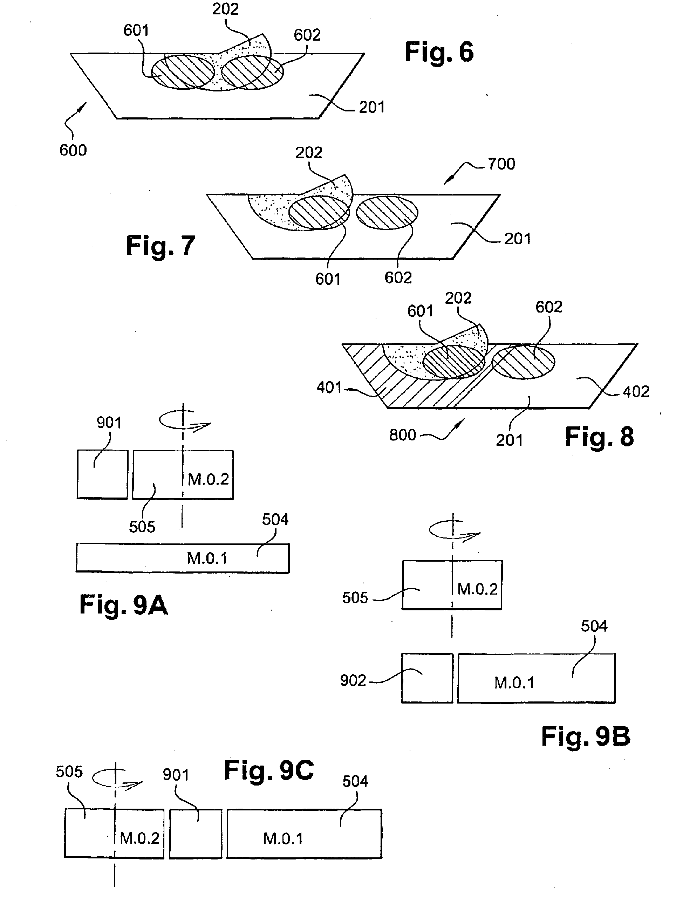

Les exemples représentés aux figures 6, 7 et 8 correspondent au faisceau global résultant des faisceaux globaux émis par deux projecteurs, droite et gauche, d'un véhicule. Dans chacune de ces figures 6, 7 et 8, chacun des projecteurs émet un faisceau correspondant respectivement aux exemples des figures 2, 3 et 4, auquel il a été rajouté un point chaud statique, 601 pour le projecteur gauche et 602 pour le projecteur droit. Tel que représenté dans cet exemple et de manière non limitative, chacun des points chauds est situé au voisinage de l'axe optique du premier module optique. Préférentiellement et tel que représenté, chacun des points chauds est situé du côté de l'axe optique correspondant au côté ou le dispositif d'éclairage est situé dans le véhicule, c'est-à-dire du côté externe du dispositif d'éclairage. C'est-à-dire que dans le faisceau émis par le projecteur gauche, le point chaud est situé à gauche par rapport au centre du premier faisceau lumineux, qu'émet le premier module, alors que dans le projecteur droit, il est situé à droite. Le point chaud d'un dispositif d'éclairage est émis par une source lumineuse statique, par exemple une diode électroluminescente.

Dans le faisceau lumineux global 600, résultant des faisceaux des deux projecteurs, on obtient donc un premier point chaud 601 et un deuxième point chaud 602 disposés de part et d'autre du centre du faisceau global 600, à proximité de celui-ci, et provenant respectivement du projecteur gauche et du projecteur droit.

Dans le faisceau lumineux global 600 obtenu lorsque le véhicule évolue en ligne droite, les deux points chauds présentent une intensité lumineuse de référence identique. Ceci permet de faire varier l'intensité à droite et gauche du faisceau global 600, selon que le véhicule tourne à droite ou à gauche. Par exemple, lors de la prise d'un virage à gauche, comme c'est le cas aux figures 7 et 8, l'intensité du point chaud 601 à gauche de l'axe optique augmente, et/ou l'intensité du point chaud 602 à droite de l'axe optique diminue, pour produire des faisceaux lumineux globaux 700 et 800.

Il est à noter qu'au lieu de faire varier l'intensité du point chaud statique, il est également possible de n'allumer ce dernier que lorsque le véhicule aborde, ou évolue dans, le virage. De même, les différentes possibilités de réalisation de projecteur avec un point chaud sont combinables avec celles décrites précédemment pour les variations de l'intensité lumineuse du premier faisceau.

Les figures 9-A, 9-B et 9-C reprennent les dispositions relatives du premier module optique 504 et du deuxième module optique 505 montrées aux figures 5-A, 5-B et 5-C, dans lesquelles on a disposé une source lumineuse statique, 901 ou 902. Dans tous les cas de figure, les sources lumineuses statiques, 901 et 902, sont disposées de sorte à rendre le dispositif d'éclairage le plus compact possible.

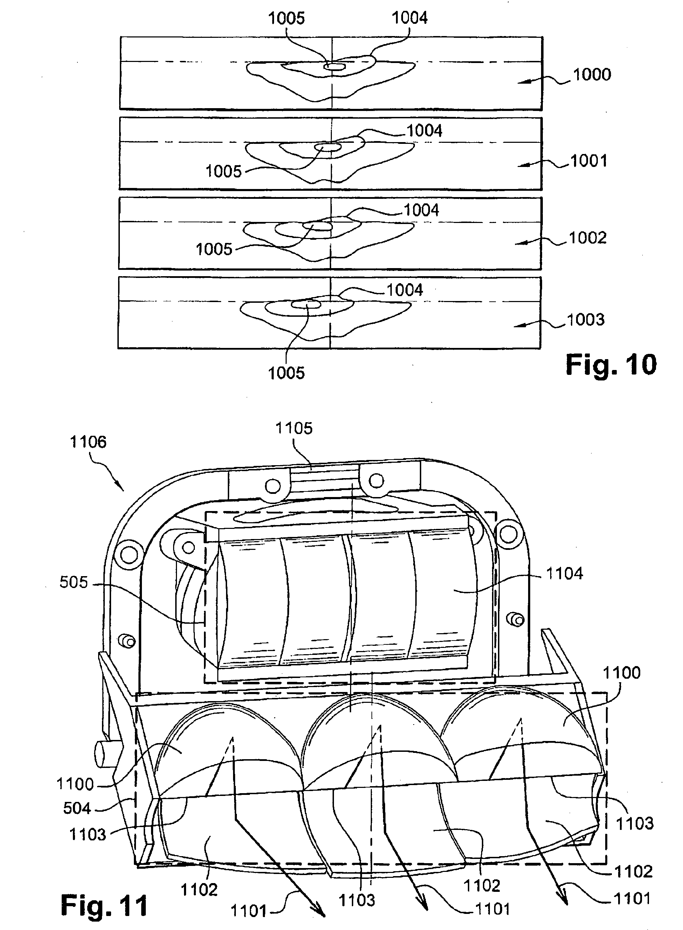

La figure 10 montre quatre diagrammes d'iso éclairement, obtenus avec un exemple de réalisation de dispositif d'éclairage selon l'invention, référencées respectivement 1000, 1001, 1002 et 1003, et qui correspondent à une évolution du véhicule respectivement en ligne droite, dans un virage à 5 degrés à gauche, dans un virage à 10 degrés à gauche, et dans un virage à 15 degrés à gauche. Chacun des diagrammes d'iso éclairement comporte, de façon schématique, trois courbes d'iso éclairement ;chaque courbe d'iso éclairement est une courbe fermée dont l'intérieur est constitué par l'ensemble des points du faisceau lumineux global dont l'intensité lumineuse est supérieure à l'intensité des points de la courbe d'iso éclairement considérée. Sur ces figures, on observe ainsi un décalage progressif vers la gauche d'une ligne de coupure oblique 1004, et d'un point chaud 1005 en accord avec les exemples précédemment mentionnés.

La figure 11 est un exemple particulier de dispositif d'éclairage 1106 selon l'invention. Dans l'exemple représenté, le premier module optique 504, fixe, est du type à surface complexe et le deuxième module optique 505, mobile, est du type elliptique. Le premier module optique 504 comporte trois réflecteurs en forme de coque 1100. Chacun de ces réflecteurs en forme de coque 1100 forme une cavité. Une LED est disposée à l'intérieur de chacune de ces cavités. Les signaux lumineux 1101 des LEDs subissent une double réflexion, tout d'abord sur une surface intérieure des réflecteurs en forme de coque 1100, puis sur un réflecteur 1102, dont une extrémité 1103, en sortie des cavités formées par les réflecteurs en forme de coque, permet de réaliser la ligne de coupure plate. Le deuxième module optique 505 comporte deux LEDs, chacune associée à un réflecteur (non représenté) et disposée derrière une lentille 1104, l'ensemble étant articulé autour d'un axe de rotation 1105 mis en mouvement par un actionneur non représenté, par exemple en fonction d'une information de type angle volant.

Dans d'autres exemples de réalisation alternatifs non représentés, le déplacement du deuxième module optique et/ou les variations d'intensité du premier module optique sont utilisés pour réaliser d'autres fonctions qu'un rendu d'éclairage dynamique dans les virages.

Dans un premier exemple de réalisation, un dispositif d'éclairage selon un mode de réalisation précédemment décrit est utilisable tant pour un trafic à droite que pour un trafic à gauche. Par exemple, la position neutre, ou « position de référence », du deuxième module optique peut être réglée selon deux positions. Pour le trafic à droite, la position neutre correspond à la position centrale telle qu'elle est représentée en figure 2. Pour le trafic à gauche, la position neutre correspond à une position du deuxième faisceau décalée sur la gauche, de sorte que le côté gauche de la route au-dessus de la coupure horizontal du premier faisceau est éclairé, et que le faisceau global émis présente une coupure plate horizontale sur la droite. Dans la figure 2, cela reviendrait à déplacer la partie inclinée 204 à gauche du centre du premier faisceau, soit à la place occupée par le segment horizontal 203.

Dans le mode de réalisation préférentiel de réalisation, que la position neutre soit réglée pour un trafic à droite ou un trafic à gauche, le deuxième module optique peut évoluer par rapport à cette position neutre pour réaliser les fonctions d'éclairage dynamique précédemment décrites.

Dans un deuxième exemple de réalisation alternatif, le deuxième module optique est apte à être positionné de manière à émettre un faisceau de distribution sensiblement centré de part et d'autre d'un axe vertical passant par le centre de l'axe optique du deuxième module et éclairant pour partie au-dessus de la coupure horizontale dudit premier faisceau lumineux de manière à contribuer à générer un faisceau route. Par exemple, par rapport à la représentation de la figure 2, le deuxième faisceau lumineux 202 va être déplacé horizontalement pour que la partie inclinée 204 soit centrée par rapport à la coupure horizontale du premier faisceau.

Selon un mode préférentiel de réalisation du deuxième exemple de réalisation alternatif, le deuxième module optique peut évoluer par rapport à cette position de référence pour réaliser les fonctions d'éclairage dynamique dans les virages en fonction route. Dans ce dernier cas, le deuxième faisceau est déplacé également du côté du virage, mais de manière plus excentrée qu'il ne l'aurait été pour réaliser un code de type éclairant dans le virage. Le deuxième faisceau sera alors sensiblement centré de part et d'autre du centre de la route et éclairant pour partie au-dessus de la coupure horizontale dudit premier faisceau lumineux.

Dans d'autres exemples de réalisation alternatifs non représentés, on fait subir au deuxième faisceau lumineux les mêmes types de variation d'intensité lumineuse que celles décrites pour le premier faisceau lumineux. Par exemple, on peut faire augmenter progressivement l'intensité du deuxième faisceau lumineux lorsqu'il est déplacé sur le côté pour le rendu d'une fonction d'éclairage dans le virage, ceci renforçant davantage le rendu, en association ou non avec les variations du premier faisceau. On peut également utiliser l'augmentation d'intensité du deuxième faisceau, dans la création de la fonction de type feu route.

Cette variation de l'intensité du deuxième faisceau mobile permet également de générer une fonction de type feu de mauvais temps ou une fonction de type feu de ville.

Dans le cadre de la fonction de type feu de mauvais temps, l'intensité deuxième faisceau lumineux est augmentée et parallèlement l'intensité du premier faisceau lumineux est diminuée.

Dans le cadre de la fonction de type feu de ville, l'intensité du deuxième faisceau lumineux est diminuée et parallèlement l'intensité du premier faisceau lumineux est augmentée. Préférentiellement, le dispositif d'éclairage peut comprendre une source lumineuse additionnelle statique pour générer un point chaud statique dans le faisceau lumineux global et améliorer l'effet d'élargissement faisceau par rapport au feu de croisement.

La variation de l'intensité du deuxième module optique étant indépendante de son mouvement, un rendu d'éclairage dynamique dans les virage en fonction de type feu ville ou de type feu de mauvais temps.

Dans un autre mode de réalisation, le deuxième module optique est également apte à effectuer un mouvement de rotation selon un axe approximativement horizontal pour contribuer à générer un faisceau de type feu d'autoroute. Selon un mode préférentiel de réalisation de ce mode de réalisation, le deuxième module optique peut évoluer par rapport à la position de référence du deuxième faisceau pour réaliser les fonctions d'éclairage dynamique dans les virages en fonction type feu d'autoroute. Comparativement à la figure 2 et 3, dans la fonction feu d'autoroute le segment horizontal 203 du deuxième faisceau 202 sera surélevé par rapport à la coupure horizontale du premier faisceau 201.

Le dispositif d'éclairage selon la présente invention permet donc, grâce à la mobilité du deuxième module optique, d'obtenir différentes fonctions avec un même module et donc une compacité réduite.

Dans la pratique, pour obtenir les variations d'intensité lumineuse du premier et du deuxième faisceaux, on fait préférentiellement varier le courant d'alimentation de différentes sources lumineuses du premier module optique et du deuxième module optique. On peut également faire varier l'intensité du faisceau en utilisant plusieurs sources lumineuses, telles que des LEDs, qui sont allumées ou éteintes selon l'intensité désirée.

La plupart des différents exemples de réalisation de l'invention ont été décrits dans le cadre d'un virage à gauche pour un trafic à droite. Les différents aspects développés sont bien évidemment directement transposables aux cas des virages à droite pour un trafic à droite, mais également transposables pour des virages à droite et des virage à gauche pour un trafic à gauche.

## Revendications

1. Procédé de mise en oeuvre d'un dispositif d'éclairage (1106) pour véhicule automobile produisant un faisceau lumineux global (200), le dispositif d'éclairage comportant :
- un premier module optique fixe (504), comportant au moins une première source lumineuse, pour produire un premier faisceau lumineux de type faisceau lumineux à coupure sensiblement plate et horizontale,
- un deuxième module optique mobile (505), comportant au moins une première source lumineuse, pour produire un deuxième faisceau lumineux de type faisceau lumineux à coupure non plate pouvant être déplacé par rapport au premier faisceau lumineux,
tel que l'intensité lumineuse du premier faisceau lumineux est
augmentée lorsque le véhicule automobile aborde, ou évolue dans, un virage orienté du côté du véhicule où ledit dispositif d'éclairage est disposé,
**caracterisé en ce que** le deuxième module optique réalise un mouvement de
rotation selon un axe approximativement vertical lorsque le véhicule automobile aborde, ou évolue dans, un virage, le mouvement de rotation du deuxième module optique suit l'orientation du virage.

2. Procédé selon la revendication précédente, **caractérisé en ce que** la ou les sources lumineuses du deuxième module optique et/ou la ou les sources lumineuses du premier module optique sont de type diode électroluminescente.

3. Procédé selon la revendication précédente, **caractérisé en ce que** l'intensité lumineuse du premier faisceau lumineux est diminuée lorsque le véhicule automobile aborde, ou évolue dans, un virage orienté du côté opposé au côté du véhicule où ledit dispositif d'éclairage est disposé.

4. Procédé selon l'une quelconque des revendications précédentes, **caractérisé en ce que** le premier module optique comporte une pluralité de sources lumineuses, l'allumage ou l'augmentation de l'intensité de chacune des sources lumineuses étant fonction du fait que le véhicule automobile aborde, ou évolue dans, un virage, rendant progressivement le faisceau lumineux global plus lumineux du côté correspondant à l'orientation du virage, lorsque cette orientation correspond au côté du véhicule où ledit dispositif d'éclairage est disposé.

5. Procédé selon la revendication précédente, **caractérisé en ce que** la diminution de l'intensité de chacune des sources lumineuses est fonction du fait que le véhicule automobile aborde, ou évolue dans, un virage, rendant progressivement le faisceau lumineux global moins lumineux du côté correspondant à l'orientation du virage, lorsque cette orientation correspond au côté opposé au côté du véhicule où ledit dispositif d'éclairage est disposé.

6. Procédé selon l'une au moins des revendications précédentes, **caractérisé en ce que** ledit dispositif d'éclairage (1106) comporte une première source lumineuse statique (901) réalisant un premier point chaud (601) dans le faisceau lumineux global, le premier point chaud étant orienté entre l'axe optique du dispositif d'éclairage et le côté correspondant au côté externe du dispositif d'éclairage, la première source lumineuse statique étant allumée ou augmentant son intensité lumineuse, lorsque le véhicule aborde, ou évolue dans, un virage orienté du côté du véhicule où ledit dispositif d'éclairage est disposé.

7. Procédé selon la revendication précédente, **caractérisé en ce que** la première source lumineuse statique est éteinte ou diminue son intensité lumineuse, lorsque le véhicule aborde ou évolue dans un virage orienté du côté opposé au côté du véhicule où ledit dispositif d'éclairage est disposé.

8. Procédé selon l'une quelconque des revendications précédentes, **caractérisé en ce que** le deuxième module optique est apte à être positionné selon au moins deux positions, une première position selon laquelle le faisceau global correspond à un faisceau code pour trafic à droite, et une deuxième position dans laquelle le faisceau global correspond à un faisceau code pour trafic à gauche.

9. Procédé selon l'une quelconque des revendications précédentes, **caractérisé en ce que** le deuxième module optique est apte à être positionné de manière à émettre un faisceau lumineux dont la zone d'intensité la plus élevée est disposée suivant l'axe optique dudit dispositif d'éclairage et éclairant pour partie au-dessus de la coupure horizontale dudit premier faisceau lumineux de manière à contribuer à générer un faisceau route.

10. Procédé selon l'une au moins des revendications 1 et 2, **caractérisé en ce que** le deuxième module optique est apte à réaliser un mouvement de rotation selon un axe approximativement horizontal pour contribuer à générer un faisceau de type feu d'autoroute.

11. Procédé selon l'une au moins des revendications précédentes, **caractérisé en ce que** l'intensité du deuxième faisceau lumineux est modulée en augmentant ou en diminuant.

12. Procédé selon la revendication précédente, **caractérisé en ce que** le dispositif d'éclairage (1106) permet l'augmentation de l'intensité du deuxième faisceau lumineux parallèlement à la diminution de l'intensité du premier faisceau lumineux, pour une fonction de type feu de mauvais temps.

13. Procédé selon la revendication précédente, **caractérisé en ce qu'**il permet la diminution de l'intensité deuxième faisceau lumineux parallèlement à l'augmentation de l'intensité de la source lumineuse du premier faisceau lumineux, pour une fonction de type feu de ville.

14. Dispositif d'éclairage (1106) pour véhicule automobile produisant un faisceau lumineux global (200), le dispositif d'éclairage comportant :
- un premier module optique fixe (504), comportant au moins une première source lumineuse, pour produire un premier faisceau lumineux de type faisceau lumineux à coupure sensiblement plate et horizontale,
- un deuxième module optique mobile (505), comportant au moins une première source lumineuse, pour produire un deuxième faisceau lumineux de type faisceau lumineux à coupure non plate pouvant être déplacé par rapport au premier faisceau lumineux,
tel que ledit dispositif d'éclairage (1106) est adapté pour augmenter l'intensité lumineuse du premier faisceau lumineux lorsque le véhicule automobile aborde, ou évolue dans, un virage orienté du côté du véhicule où ledit dispositif d'éclairage est disposé,
**caractérisé en ce que** ledit dispositif d'éclairage (1106) est adapté pour réaliser un mouvement de rotation du deuxième module optique selon un axe approximativement vertical lorsque le véhicule automobile aborde, ou évolue dans, un virage, le mouvement de rotation du deuxième module optique suivant l'orientation du virage.

15. Dispositif d'éclairage (1106) selon la revendication précédente, ledit dispositif
d'éclairage (1106) étant apte mettre en oeuvre le procédé selon l'une des revendications 2 à 13.

## Patentansprüche

1. Verfahren zur Verwendung einer ein Gesamtlichtbündel (200) erzeugenden Kfz-Beleuchtungsvorrichtung (1106), wobei die Beleuchtungsvorrichtung umfasst:
- ein erstes feststehendes Optikmodul (504) mit wenigstens einer ersten Lichtquelle zum Erzeugen eines ersten Lichtbündels vom Typ Lichtbündel mit im Wesentlichen ebener und horizontaler Hell-Dunkel-Grenze,
- ein zweites bewegliches Optikmodul (505) mit wenigstens einer ersten Lichtquelle zum Erzeugen eines zweiten Lichtbündels vom Typ Lichtbündel mit nicht ebener Hell-Dunkel-Grenze, das bezüglich des ersten Lichtbündels verschoben werden kann,
wobei die Lichtintensität des ersten Lichtbündels erhöht wird, wenn das Kraftfahrzeug in eine Kurve einbiegt oder eine Kurve befährt, die zu der Seite des Fahrzeugs verläuft, auf der die Beleuchtungsvorrichtung angeordnet ist,
**dadurch gekennzeichnet, dass** das zweite Optikmodul eine Drehbewegung entlang einer ungefähr vertikalen Achse ausführt, wenn das Kraftfahrzeug in eine Kurve einbiegt oder eine Kurve befährt, wobei die Drehbewegung des zweiten Optikmoduls der Kurvenrichtung folgt.

2. Verfahren nach dem vorhergehenden Anspruch,
**dadurch gekennzeichnet, dass** die Lichtquelle bzw. Lichtquellen des zweiten Optikmoduls und/oder die Lichtquelle bzw. Lichtquellen des ersten Optikmoduls vom Typ Leuchtdioden sind.

3. Verfahren nach dem vorhergehenden Anspruch,
**dadurch gekennzeichnet, dass** die Lichtintensität des ersten Lichtbündels verringert wird, wenn das Kraftfahrzeug in eine Kurve einbiegt oder eine Kurve befährt, die zu der Seite verläuft, die der Fahrzeugseite, auf der die Beleuchtungsvorrichtung angeordnet ist, entgegengesetzt ist.

4. Verfahren nach einem der vorhergehenden Ansprüche,
**dadurch gekennzeichnet, dass** das erste Optikmodul eine Vielzahl von Lichtquellen umfasst, wobei das Einschalten bzw. Erhöhen der Lichtintensität einer jeden Lichtquelle davon abhängt, ob das Kraftfahrzeug in eine Kurve einbiegt bzw. eine Kurve befährt, wodurch das Gesamtlichtbündel auf der der Kurvenrichtung entsprechenden Seite allmählich lichtstärker wird, wenn die Kurvenrichtung der Fahrzeugseite entspricht, auf der die Beleuchtungsvorrichtung angeordnet ist.

5. Verfahren nach dem vorhergehenden Anspruch,
**dadurch gekennzeichnet, dass** das Verringern der Lichtintensität einer jeden Lichtquelle davon abhängt, ob das Kraftfahrzeug in eine Kurve einbiegt bzw. eine Kurve befährt, wodurch das Gesamtlichtlichtbündel auf der der Kurvenrichtung entsprechenden Seite allmählich lichtschwäc her wird, wenn die Kurvenrichtung der Seite entspricht, die der Fahrzeugseite, auf der die Beleuchtungsvorrichtung angeordnet ist, entgegengesetzt ist.

6. Verfahren nach wenigstens einem der vorhergehenden Ansprüche,
**dadurch gekennzeichnet, dass** die Beleuchtungsvorrichtung (1106) eine erste statische Lichtquelle (901) umfasst, die einen ersten Hot-Spot (601) in dem Gesamtlichtbündel erzeugt, wobei der erste Hot-Spot zwischen der optischen Achse der Beleuchtungsvorrichtung und der der Außenseite der Beleuchtungsvorrichtung entsprechenden Seite ausgerichtet ist, wobei die erste statische Lichtquelle eingeschaltet bzw. ihre Lichtintensität erhöht wird, wenn das Fahrzeug in eine Kurve einbiegt bzw. eine Kurve befährt, die zu der Seite des Fahrzeugs verläuft, auf der die Beleuchtungsvorrichtung angeordnet ist.

7. Verfahren nach dem vorhergehenden Anspruch,
**dadurch gekennzeichnet, dass** die erste statische Lichtquelle ausgeschaltet bzw. ihre Lichtintensität verringert wird, wenn das Fahrzeug in eine Kurve einbiegt bzw. eine Kurve befährt, die zu der Seite verläuft, die der Fahrzeugseite, auf der die Beleuchtungsvorrichtung angeordnet ist, entgegengesetzt ist.

8. Verfahren nach einem der vorhergehenden Ansprüche,
**dadurch gekennzeichnet, dass** das zweite Optikmodul in wenigstens zwei Stellungen positioniert zu werden vermag, einer ersten Stellung, in der das Gesamtlichtbündel einem Abblendlicht für Rechtsverkehr entspricht, und einer zweiten Stellung, in der das Gesamtlichtbündel einem Abblendlicht für Linksverkehr entspricht.

9. Verfahren nach einem der vorhergehenden Ansprüche,
**dadurch gekennzeichnet, dass** das zweite Optikmodul solchermaßen positioniert zu werden vermag, dass es ein Lichtbündel emittiert, dessen stärkster Lichtintensitätsbereich entlang der optischen Achse der Beleuchtungsvorrichtung angeordnet ist und das zum Teil über der horizontalen Hell-Dunkel-Grenze des ersten Lichtbündels derart leuchtet, dass es zum Erzeugen eines Fernlichts beiträgt.

10. Verfahren nach wenigstens einem der Ansprüche 1 und 2,
**dadurch gekennzeichnet, dass** das zweite Optikmodul eine Drehbewegung entlang einer ungefähr horizontalen Achse auszuführen vermag, um zum Erzeugen eines Lichtbündels vom Typ Autobahnlicht beizutragen.

11. Verfahren nach wenigstens einem der vorhergehenden Ansprüche,
**dadurch gekennzeichnet, dass** die Intensität des zweiten Lichtbündels durch Zunahme oder Abnahme verändert wird.

12. Verfahren nach dem vorhergehenden Anspruch,
**dadurch gekennzeichnet, dass** die Beleuchtungsvorrichtung (1106) die Zunahme der Intensität des zweiten Lichtbündels parallel zur Verringerung der Intensität des ersten Lichtbündels für eine Lichtfunktion vom Typ Schlechtwetterlicht ermöglicht.

13. Verfahren nach dem vorhergehenden Anspruch,
**dadurch gekennzeichnet, dass** es die Verringerung der Intensität des zweiten Lichtbündels parallel zur Zunahme der Intensität der Lichtquelle des ersten Lichtbündels für eine Lichtfunktion vom Typ Stadtlicht ermöglicht.

14. Kfz-Beleuchtungsvorrichtung (1106), die ein Gesamtlichtbündel (200) erzeugt, wobei die Beleuchtungsvorrichtung umfasst:
- ein erstes, feststehendes Optikmodul (504) mit wenigstens einer ersten Lichtquelle zum Erzeugen eines ersten Lichtbündels vom Typ Lichtbündel mit im Wesentlichen ebener und horizontaler Hell-Dunkel-Grenze,
- ein zweites, bewegliches Optikmodul (505) mit wenigstens einer ersten Lichtquelle zum Erzeugen eines zweiten Lichtbündels vom Typ Lichtbündel mit nicht ebener Hell-Dunkel-Grenze, das bezüglich des ersten Lichtbündels verschoben werden kann,
wobei die Beleuchtungsvorrichtung (1106) die Lichtintensität des ersten Lichtbündels zu erhöhen vermag, wenn das Kraftfahrzeug in eine Kurve einbiegt oder eine Kurve befährt, die zu der Seite des Fahrzeugs verläuft, auf der die Beleuchtungsvorrichtung angeordnet ist,
**dadurch gekennzeichnet, dass** die Beleuchtungsvorrichtung (1106) eine Drehbewegung des zweiten Optikmoduls entlang einer ungefähr vertikalen Achse auszuführen vermag, wenn das Kraftfahrzeug in eine Kurve einbiegt oder eine Kurve befährt, wobei die Drehbewegung des zweiten Optikmoduls der Kurvenrichtung folgt.

15. Beleuchtungsvorrichtung (1106) nach dem vorhergehenden Anspruch, wobei die Beleuchtungsvorrichtung (1106) das Verfahren nach einem der Ansprüche 2 bis 13 auszuführen vermag.

## Claims

1. Process for implementation of a lighting device (1106) for a motor vehicle, producing a global light beam (200), the lighting device comprising:
- a first, fixed optical module (504), comprising at least a first source of light, in order to produce a first light beam of the substantially flat and horizontal cut-off light beam type;
- a second, mobile optical module (505), comprising at least a first source of light, in order to produce a second light beam of the non-flat cut-off light beam type, which can be displaced relative to the first light beam;
- such that the light intensity of the first light beam is increased when the motor vehicle approaches, or goes into, a bend which is oriented on the side of the vehicle where the said lighting device is arranged,
**characterised in that** the second optical module performs a movement of rotation according to an approximately vertical axis, when the motor vehicle approaches, or goes into, a bend, and the movement of rotation of the second optical module follows the orientation of the bend.

2. Process according to the preceding claim, **characterised in that** the source(s) of light of the second optical module and/or the source(s) of light of the first optical module is/are of the light-emitting diode type.

3. Process according to the preceding claim, **characterised in that** the light intensity of the first light beam is decreased when the motor vehicle approaches, or goes into, a bend which is oriented on the side opposite the side of the vehicle where the said lighting device is arranged.

4. Process according to any one of the preceding claims, **characterised in that** the first optical module comprises a plurality of sources of light, the switching on or the increase in the intensity of each of the sources of light depending on the fact that the motor vehicle is approaching, or going into, a bend, thus rendering the global light beam progressively brighter on the side corresponding to the orientation of the bend, when this orientation corresponds to the side of the vehicle where the said lighting device is arranged.

5. Process according to the preceding claim, **characterised in that** the decrease in the intensity of each of the sources of light depends on the fact that the motor vehicle is approaching, or going into, a bend, thus rendering the global light beam progressively less bright on the side corresponding to the orientation of the bend, when this orientation corresponds to the side opposite the side of the vehicle where the said lighting device is arranged.

6. Process according to at least one of the preceding claims, **characterised in that** the said lighting device (1106) comprises a first, static source of light (901) which creates a first hot spot (601) in the global light beam, the first hot spot being oriented between the optical axis of the lighting device and the side corresponding to the outer side of the lighting device, the first, static source of light being switched on, or having its light intensity increased, when the vehicle approaches, or goes into, a bend which is oriented on the side of the vehicle where the said lighting device is arranged.

7. Process according to the preceding claim, **characterised in that** the first, static source of light is switched off, or has its light intensity decreased, when the vehicle approaches, or goes into a bend which is oriented on the side opposite the side of the vehicle where the said lighting device is arranged.

8. Process according to any one of the preceding claims, **characterised in that** the second optical module can be positioned according to at least two positions, i.e. a first position according to which the global beam corresponds to a low beam for traffic on the right, and a second position in which the global beam corresponds to a low beam for traffic on the left.

9. Process according to any one of the preceding claims, **characterised in that** the second optical module can be positioned such as to emit a light beam, the area of greatest intensity of which is arranged according to the optical axis of the said lighting device, and lights partly above the horizontal cut-off of the said first light beam, such as to contribute towards generating a high beam.

10. Process according to at least one of claims 1 and 2, **characterised in that** the second optical module can perform a movement of rotation according to an approximately horizontal axis, in order to contribute towards generating a beam of the motorway headlight type.

11. Process according to at least one of the preceding claims, **characterised in that** the intensity of the second light beam is modulated by being increased or decreased.

12. Process according to the preceding claim, **characterised in that** the lighting device (1106) permits the increase in the intensity of the second light beam in parallel with the decrease in the intensity of the first light beam, for a function of the bad weather headlight type.

13. Process according to the preceding claim, **characterised in that** it permits the decrease in the intensity of the second light beam in parallel with the increase in the intensity of the source of light of the first light beam, for a function of the town headlight type.

14. Lighting device (1106) for a motor vehicle, producing a global light beam (200), the lighting device comprising:
- a first, fixed optical module (504), comprising at least a first source of light, in order to produce a first light beam of the substantially flat and horizontal cut-off light beam type;
- a second, mobile optical module (505), comprising at least a first source of light, in order to produce a second light beam of the non-flat cut-off light beam type, which can be displaced relative to the first light beam,
such that the said lighting device (1106) is designed to increase the light intensity of the first light beam when the motor vehicle is approaching, or going into, a bend which is oriented on the side of the vehicle where the said lighting device is arranged, **characterised in that** the said lighting device (1106) is designed to perform a movement of rotation of the second optical module according to an approximately vertical axis, when the motor vehicle is approaching, or going into, a bend, the movement of rotation of the second optical module following the orientation of the bend.

15. Lighting device (1106) according to the preceding claim, the said lighting device (1106) being able to implement the process according to one of claims 2 to 13.
